# FASCICULE DE BREVET EUROPEEN

(11) **EP 3 737 572 B1**
(45) Date de publication et mention de la délivrance du brevet: **01.12.2021**
(21) Numéro de dépôt: 19702943.2
(22) Date de dépôt: 03.01.2019
(51) Int. Cl.: B60H 1/00, F04D 29/42

(54) **BOITIER D'ENTREE D'AIR ET PULSEUR POUR DISPOSITIF DE CHAUFFAGE, VENTILATION ET/OU CLIMATISATION POUR VEHICULE AUTOMOBILE CORRESPONDANT**
LUFTEINLASSGEHÄUSE UND GEBLÄSE FÜR EINE ENTSPRECHENDE HEIZUNGS-, LÜFTUNGS- UND/ODER KLIMATISIERUNGSVORRICHTUNG EINES KRAFTFAHRZEUGS
AIR INTAKE HOUSING AND BLOWER FOR A CORRESPONDING MOTOR VEHICLE HEATING, VENTILATION AND/OR AIR CONDITIONING DEVICE

(30) Priorité: 12.01.2018 FR 1850253
(43) Date de publication de la demande: 18.11.2020
(73) Titulaire: Valeo Systemes Thermiques, 78320 Le Mesnil-Saint-Denis (FR)
(72) Inventeur: BARBIER, Thierry, 78322 LE MESNIL SAINT-DENIS CEDEX (FR); AILLOUD, Fabrice, 78322 LE MESNIL SAINT-DENIS CEDEX (FR); PIERRES, Philippe, 78322 LE MESNIL SAINT-DENIS CEDEX (FR)
(74) Mandataire: Valeo Systèmes Thermiques
(86) Numéro de dépôt international: PCT/FR2019/050004
(87) Numéro de publication internationale: WO 2019/138172

(56) Documents cités:
- EP-A1- 2 889 168
- DE-A1- 19 963 796
- FR-A1- 2 879 510
- FR-A1- 3 014 029

## Description

### Domaine technique de l'invention

La présente invention concerne un boîtier d'entrée d'air et un pulseur d'aspiration comprenant un tel boîtier d'entrée d'air, destiné à un dispositif de chauffage, ventilation et/ou climatisation d'un véhicule automobile. L'invention concerne également un dispositif de chauffage, ventilation et/ou climatisation comportant un tel pulseur.

### État de la technique antérieur

Un véhicule automobile comporte un habitacle dans lequel débouche de l'air issu classiquement d'un dispositif de chauffage, ventilation et/ou climatisation.

Le dispositif de chauffage, ventilation et/ou climatisation, également connu sous sa dénomination anglaise HVAC (pour Heating, Ventilation and Air-Conditioning) peut être alimenté soit en air extérieur au véhicule (également appelé air frais), soit en air de recyclage, c'est-à-dire issu de l'habitacle du véhicule. De façon connue, un pulseur est mis en œuvre pour faire circuler le flux d'air. Il peut s'agir du flux d'air frais ou neuf provenant de l'extérieur du véhicule ou du flux d'air de recyclage provenant de l'habitacle du véhicule ou encore d'un mélange des flux d'air extérieur et recyclé.

Il est important de pouvoir dissocier les flux d'air (air extérieur - air de recyclage), en particulier lors du passage, des flux d'air au travers du dispositif de chauffage, ventilation et/ou climatisation, en fonction des besoins des occupants du véhicule, ou en d'autres termes lors du conditionnement thermique des flux d'air.

En effet, l'air de recyclage étant déjà à une température proche de la température de consigne à atteindre, il est ainsi possible d'atteindre rapidement la température souhaitée par l'utilisateur. Toutefois, l'air de recyclage est plus chargé en humidité que l'air provenant de l'extérieur du véhicule, si bien que si l'air de recyclage est dirigé à proximité du pare-brise par l'intermédiaire de bouches d'aération, situées en avant du conducteur ou du passager avant, par exemple, ou directement sur le pare-brise, l'humidité comprise dans l'air de recyclage se condense sur le pare-brise et crée de la buée.

Une solution connue consiste à conditionner thermiquement le flux d'air extérieur et à l'envoyer dans l'habitacle à proximité du pare-brise ou directement sur celui-ci, et à conditionner thermiquement le flux d'air de recyclage et à l'envoyer dans l'habitacle à distance du pare-brise, au niveau des autres bouches d'aération, telles que des sorties de bouches d'aération situées au niveau des pieds du conducteur ou passager avant. Il s'agit d'un mode de fonctionnement double nappe appelé « double layer » en anglais.

Des dispositifs de chauffage, ventilation et/ou climatisation connus comportent des moyens d'arrivée d'air comprenant un boîtier d'entrée d'air permettant l'entrée d'un ou plusieurs flux d'air distincts au sein du pulseur, et un organe de génération d'air tel qu'une turbine, par exemple cylindrique, configuré pour être entraînée en rotation autour de son axe de manière à pulser le ou les flux d'air.

Un tel pulseur est dénommé « mono-aspiration », car l'air pénètre dans le pulseur d'un seul côté de la turbine, à savoir du côté où est situé le boîtier et l'organe de séparation des flux d'air.

Afin de séparer deux flux d'air, notamment le flux d'air de recyclage et le flux d'air extérieur, le pulseur peut comporter un organe de séparation des flux d'air configuré pour délimiter un premier canal de circulation d'air permettant l'écoulement d'un premier flux d'air destiné à traverser une première partie axiale de la turbine et un deuxième canal de circulation d'air permettant l'écoulement d'un deuxième flux d'air destiné à traverser une deuxième partie axiale de la turbine. Cet organe de séparation des flux d'air définit un canal séparant les flux d'air en un flux central circulant à l'intérieur du canal formant le premier canal de circulation d'air, et un flux périphérique circulant à la périphérie du canal, le deuxième canal de circulation d'air s'étendant à l'extérieur de l'organe de séparation des flux d'air.

L'organe de séparation des flux d'air s'étend par exemple en partie dans l'espace interne de la turbine jusqu'à un point situé au-delà d'une extrémité de la turbine du côté du boîtier d'entrée d'air. Le boîtier d'entrée d'air recouvre cette extrémité de la turbine et l'organe de séparation des flux d'air.

Selon une solution connue, l'organe de séparation des flux d'air présente une extrémité amont ou supérieure située en partie inférieure du boîtier d'entrée d'air et de section sensiblement rectangulaire. L'extrémité amont présente une ouverture dans le prolongement du canal de l'organe de séparation des flux d'air formant le premier canal de circulation d'air. Cette ouverture est délimitée par deux plaques permettant le maintien de l'organe de séparation des flux d'air dans le pulseur.

Toutefois, ces plaques de maintien s'étendent sur toute la largeur de la section de passage d'air délimitée dans le boîtier d'entrée d'air, et avec cet agencement l'écoulement du flux d'air destiné à circuler à l'extérieur de l'organe de séparation des flux d'air n'est pas optimisé. Par ailleurs, afin d'améliorer la qualité de l'air envoyé vers l'habitacle, il est connu de placer un filtre pour filtrer les particules présentes dans l'air, en amont du pulseur d'aspiration par exemple, ou en variante dans le pulseur en amont de la turbine et de l'organe de séparation des flux d'air.

Cependant dans cette dernière variante, les flux d'air, notamment le flux d'air de recyclage et le flux d'air extérieur dans un mode de fonctionnement dit « double layer », peuvent être mélangés au niveau de ce filtre. Un tel mélange des flux d'air a pour effet de dégrader les performances thermiques du dispositif de chauffage et/ou ventilation et/ou climatisation, notamment du fait de la présence d'air extérieur plus froid dans le flux d'air de recyclage à destination de sorties ou bouches d'aération situées au niveau des pieds du conducteur ou passager avant par exemple, ou encore d'augmenter les risques d'embuage du pare-brise par exemple, notamment du fait de la présence d'air de recyclage dans le flux d'air extérieur à destination de sorties ou bouches qui arrosent le pare-brise.

De plus, un véhicule électrique ou un véhicule ayant un moteur thermique à haute efficacité présentent une faible capacité de chauffage lors du démarrage, si bien que si un utilisateur souhaite procéder au dégivrage du pare-brise, il faudra un temps important avant de pouvoir dégivrer efficacement celui-ci.

Un boîtier d'entrée d'air connu, comprenant deux entrées d'air et des organes de guidage d'air, les organes de guidage d'air comportant deux volets coaxiaux, est divulgué par le document EP 2 889 168 A1. Cependant, la séparation des flux d'air peut être améliorée.

### Exposé de l'invention

L'invention a pour objectif de pallier au moins partiellement ces problèmes de l'art antérieur en proposant une variante de pulseur permettant d'améliorer le partitionnement pour séparer les flux d'air et l'écoulement de ces flux d'air.

À cet effet, l'invention a pour objet un boîtier d'entrée d'air, notamment pour un dispositif de chauffage, ventilation et/ou climatisation, comportant :
- au moins deux entrées d'air distinctes, et
- des organes de guidage d'air configurés pour diriger au moins un flux d'air destiné à être admis dans le boîtier d'entrée d'air,
les organes de guidage d'air comportent au moins trois volets coaxiaux, dont un volet central et deux volets latéraux agencés de part et d'autre du volet central, lesdits volets coaxiaux étant agencés entre lesdites deux entrées d'air distinctes du boîtier d'entrée d'air, de façon mobile autour d'un unique axe de pivotement.

Selon l'invention, le boitier d'entrée d'air comprend un mécanisme d'actionnement permettant de déplacer les deux volets latéraux indépendamment l'un de l'autre.

Autrement dit, le boitier d'entrée d'air comprend un mécanisme d'actionnement permettant de déplacer un volet latéral de manière indépendante de l'autre volet latéral. En d'autres termes, chaque volet latéral peut adopter une configuration différente ou la même configuration que l'autre volet latéral.

Un tel agencement permet d'optimiser le cloisonnement / partitionnement entre les entrées d'air pour diriger des flux d'air, en particulier lorsqu'ils sont différents, de façon distincte vers la partie axiale de la turbine associée. On améliore ainsi le fonctionnement du pulseur et plus généralement du dispositif de chauffage et/ou ventilation et/ou climatisation intégrant un tel pulseur, et le mécanisme d'actionnement permet de mettre en œuvre plusieurs modes de fonctionnement distincts, notamment un mode 50/50 qui sera décrit ultérieurement, où un flux d'air de recyclage peut être mélangé à flux d'air extérieur, le mélange étant ensuite dirigé vers le pare-brise afin de procéder à un dégivrage rapide du pare-brise pour véhicule électrique.

Un autre aspect selon l'invention est que le mécanisme d'actionnement permet de déplacer les deux volets latéraux soit dans une première position où lesdits volets latéraux obture une première entrée d'air, par exemple l'entrée d'air extérieur, soit dans une seconde position extrême, dans laquelle ledit volet obture la seconde entrée d'air, par exemple l'entrée d'air de recyclage.

Autrement dit, les deux volets latéraux fonctionnent en mode tout ou rien (0 - 100%), et ne sont configurés que pour adopter uniquement ces deux positions extrêmes. Ceci permet notamment d'éviter tout contournement du pulseur, le flux d'air pouvant s'écouler directement de l'entrée d'air extérieur à travers l'entrée d'air de recyclage sans passer par le pulseur. Ceci résulte en une quantité d'air frais entrant dans l'habitacle sans avoir été préalablement traité thermiquement par l'installation de chauffage, ventilation et/ou climatisation du véhicule, provoquant ainsi un inconfort pour les passagers du véhicule.

Ledit boîtier d'entrée d'air peut en outre comporter une ou plusieurs caractéristiques suivantes, prises séparément ou en combinaison :
- lesdits volets coaxiaux sont chacun agencés mobiles entre une première position extrême, dans laquelle ledit volet obture une entrée d'air, et une deuxième position extrême, dans laquelle ledit volet obture l'autre entrée d'air ;
- lesdits volets coaxiaux sont de type tambour ;
- le boîtier d'entrée d'air présente au moins une butée contre laquelle un volet latéral est configuré pour venir en appui dans une position extrême ;
- les volets coaxiaux sont configurés pour diriger un flux d'air dans le premier canal de circulation d'air et/ou dans le deuxième canal de circulation d'air.

L'invention concerne également un pulseur d'aspiration, notamment pour un dispositif de chauffage, ventilation et/ou climatisation d'un véhicule automobile, le pulseur comprenant :
- une turbine configurée pour être entrainée en rotation autour d'un axe et présentant au moins une première partie axiale dite « partie haute » et une deuxième partie axiale dite « partie basse »,
- une volute entourant la turbine et présentant une sortie de volute s'étendant selon un axe, et
- un boîtier d'entrée d'air tel que décrit précédemment, l'axe de pivotement des volets coaxiaux étant parallèle à l'axe d'extension de la sortie de volute.

Ledit pulseur peut en outre comporter une ou plusieurs caractéristiques suivantes, prises séparément ou en combinaison :
- l'axe de pivotement des volets coaxiaux est perpendiculaire à l'axe de rotation de la turbine ;
- ledit pulseur comprenant en outre une cloison séparatrice s'étendant au moins en partie dans la turbine, de façon à séparer un premier flux d'air destiné à traverser la première partie axiale de la turbine et un deuxième flux d'air destiné à traverser la deuxième partie axiale de la turbine ;
- la cloison séparatrice présente une extrémité amont s'étendant dans le boîtier d'entrée d'air selon une direction d'extension principale perpendiculaire à l'axe d'extension de la sortie de volute ou à l'axe d'écoulement d'au moins un flux d'air en sortie de la volute, et à l'axe de rotation de la turbine ;
- l'axe d'extension de la sortie de volute est perpendiculaire à l'axe de rotation de la turbine ;
- le boîtier d'entrée d'air comprend un espace interne délimitant une section de passage d'air ayant une première dimension selon une direction perpendiculaire à l'axe d'extension de la sortie de volute et une deuxième dimension parallèle à l'axe d'extension de la sortie de volute ;
- l'extrémité amont de la cloison séparatrice s'étend sur toute la première dimension et sur une partie de la deuxième dimension ;
- la cloison séparatrice définit un canal interne de contour fermé ;
- le canal interne forme au moins une partie d'un premier canal de circulation d'air permettant l'écoulement du premier flux d'air, un deuxième canal de circulation d'air permettant l'écoulement du deuxième flux d'air s'étendant à l'extérieur de la cloison séparatrice ;
- la cloison séparatrice est agencée fixe dans ledit pulseur ;
- la cloison séparatrice est coaxiale à la turbine ;
- la cloison séparatrice présente une forme de révolution autour de l'axe de rotation de la turbine ;
- la cloison séparatrice présente une partie amont de forme générale cylindrique se terminant par l'extrémité amont ;
- la cloison séparatrice présente une partie avale évasée du côté opposé de l'extrémité amont ;
- ledit pulseur comporte en outre une cloison séparatrice additionnelle agencée dans le boîtier d'entrée d'air de manière à entourer au moins partiellement une région d'extrémité du volet central dans une position extrême ;
- la cloison séparatrice additionnelle est agencée fixe dans ledit pulseur ;
- la cloison séparatrice additionnelle présente un cadre s'étendant principalement selon une direction d'extension perpendiculaire à l'axe d'extension de la sortie de volute ;
- la cloison séparatrice additionnelle comporte une ceinture s'étendant à l'aplomb du cadre de manière à entourer au moins partiellement une région d'extrémité du volet central dans une position extrême ;
- le cadre de la cloison séparatrice additionnelle présente au moins une butée contre laquelle le volet central est configuré pour venir en butée dans une position extrême ;
- le cadre de la cloison séparatrice additionnelle présente une forme complémentaire à la forme de l'extrémité amont de la cloison séparatrice ;
- le cadre de la cloison séparatrice additionnelle est agencé en regard de la cloison séparatrice ;
- ledit un pulseur comportant en outre un filtre agencé axialement entre la cloison séparatrice et la cloison séparatrice additionnelle.

L'invention concerne encore un dispositif de chauffage, ventilation et/ou climatisation comprenant un pulseur d'aspiration tel que décrit précédemment.

### Brève description des figures

D'autres caractéristiques et avantages de l'invention ressortiront à la lecture de la description qui suit, en référence aux figures annexées, parmi lesquelles :
- la figure 1 est une vue en perspective d'un pulseur selon l'invention ;
- la figure 2 est une autre vue en perspective du pulseur de la figure 1 ;
- la figure 3 est une vue schématique du pulseur de la figure 1 sur laquelle on a ôté un boîtier d'entrée d'air ;
- la figure 4 représente de façon schématique une vue de dessus du pulseur des figures 1 et 3,
- la figure 5a est une vue schématique selon une coupe axiale du pulseur et illustre un premier mode de fonctionnement ;
- la figure 5b est une vue schématique selon une coupe axiale du pulseur et illustre un deuxième mode de fonctionnement ; et
- la figure 5c est une vue schématique selon une coupe axiale du pulseur et illustre un troisième mode de fonctionnement.
- la figure 5d est une vue schématique selon une coupe axiale du pulseur et illustre un quatrième mode de fonctionnement.

Sur ces figures, les éléments identiques portent les mêmes références.

### Description détaillée des modes de réalisation

Les réalisations suivantes sont des exemples donnés à titre d'illustration de l'objet de l'invention. L'invention n'est pas limitée à ces modes de réalisation. Bien que la description se réfère à un ou plusieurs modes de réalisation, ceci ne signifie pas nécessairement que chaque référence concerne le même mode de réalisation, ou que les caractéristiques s'appliquent seulement à un mode de réalisation. De simples caractéristiques de différents modes de réalisation peuvent également être combinées ou interchangées pour fournir d'autres réalisations.

Dans la description on peut indexer certains éléments, autrement dit on peut par exemple mentionner un premier élément ou un deuxième élément. Dans ce cas, il s'agit d'un simple indexage pour différencier et dénommer des éléments proches mais non identiques. Cet indexage n'implique pas une priorité d'un élément, par rapport à un autre. On peut aisément interchanger de telles dénominations sans sortir du cadre de la présente invention.

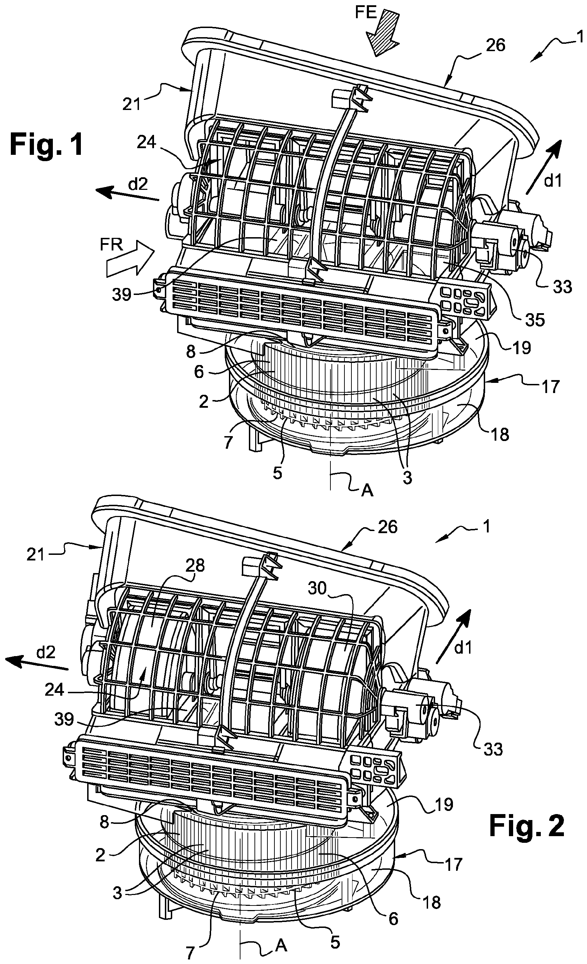

L'invention concerne un boîtier d'entrée d'air 21 pour un pulseur 1 d'aspiration tel qu'illustré sur les figures 1 et 2, permettant l'écoulement d'au moins deux flux d'air différents au sein du pulseur 1, par exemple permettant l'écoulement d'un flux d'air de recyclage FR et d'un flux d'air extérieur FE.

### Pulseur

On a représenté sur les figures 1 et 2, un pulseur 1, notamment pour un dispositif de chauffage et/ou ventilation et/ou climatisation de véhicule automobile.

Le pulseur 1 d'aspiration comporte notamment un organe de génération d'air tel qu'une turbine 2, destinée à être entraînée en rotation autour d'un axe A, notamment par un moteur électrique (non visible sur les figures), afin de pulser l'air. Le pulseur 1 comporte généralement un boîtier, communément appelé volute 17, entourant la turbine 2.

Comme dit précédemment, le pulseur 1 comporte un boîtier additionnel formant boîtier d'entrée d'air 21. Le pulseur 1 comporte encore avantageusement au moins un organe de séparation des flux d'air.

La turbine 2 est par exemple de forme générale cylindrique, d'axe A. Dans la suite de la description, les termes axial et radial se rapportent à l'axe A.

La turbine 2 comporte des pales 3 à sa périphérie radialement externe et délimite intérieurement un espace cylindrique.

La turbine 2 comporte une première partie 5 axiale dite « partie haute » et une deuxième partie 6 axiale dite « partie basse ». La première partie 5 axiale s'étend depuis une première extrémité 7 de la turbine 2 jusqu'à une zone axialement médiane. La deuxième partie 6 axiale s'étend depuis la zone axialement médiane jusqu'à une deuxième extrémité 8, opposée à la première extrémité 7, de la turbine 2.

Un moyeu (non représenté) est généralement fixé à la turbine 2 et sert de déflecteur pour les flux d'air circulant. Le moyeu se présente, par exemple, sous la forme d'une pièce de révolution d'axe A.

Un arbre rotatif d'entraînement (non représenté) du moteur électrique est par exemple fixé au niveau d'une zone centrale du moyeu. En fonctionnement, le moteur entraîne en rotation le moyeu et la turbine 2.

Les termes haut et bas, ou, supérieur et inférieur, sont définis ici par référence aux figures et n'ont pas de caractère limitatif.

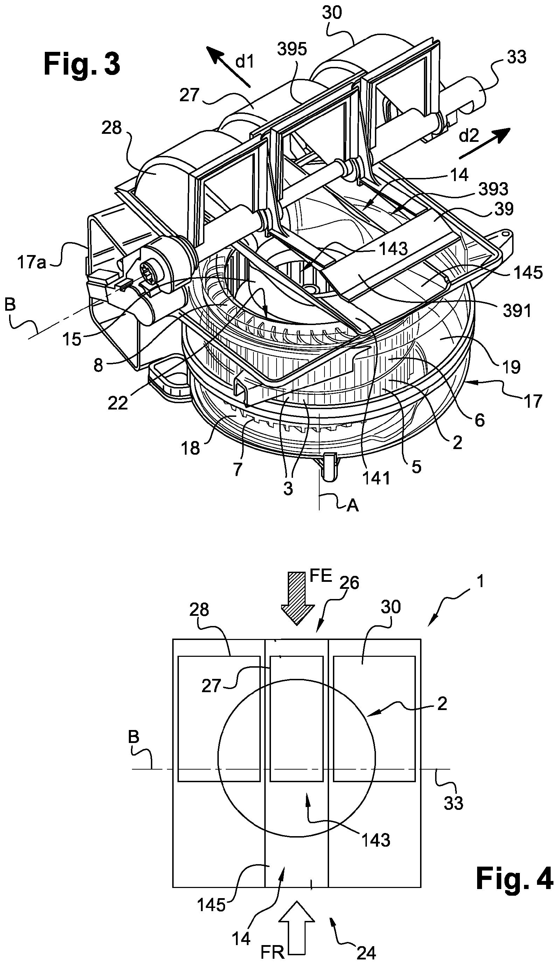

La volute 17 entourant la turbine 2, assure la canalisation du flux d'air pulsé. Plus précisément, un flux d'air est aspiré et mis en circulation par la turbine 2 puis est extrait de la volute 17 par une sortie 17a (partiellement représentée sur la figure 3), destinée à être raccordée à un conduit d'air du dispositif de chauffage, de ventilation et/ou de climatisation. Selon le mode de réalisation décrit, la volute 17 définit une forme générale de spirale. La forme en spirale de la volute 17 présente donc une première partie d'enroulement(s). La forme de la volute 17 évolue ensuite de façon plus linéaire formant ainsi la sortie de volute 17a jusqu'à une ouverture de sortie d'air débouchant par exemple dans le conduit d'air du dispositif de chauffage, de ventilation et/ou de climatisation.

La sortie 17a de volute 17 se termine donc par cette ouverture de sortie d'air qui s'inscrit dans un plan, qui est représenté vertical en référence à la disposition sur la figure 3. À l'état assemblé dans le véhicule automobile, l'ouverture de sortie d'air peut s'inscrire notamment dans un plan suivant l'axe longitudinal du véhicule et l'axe vertical.

La sortie 17a de volute 17 évolue selon un axe B. Il s'agit d'un axe transversal au plan dans lequel s'inscrit l'ouverture de sortie d'air.

L'axe B d'extension ou d'évolution de la sortie de volute 17a est perpendiculaire à l'axe A de rotation de la turbine 2 (tel que schématisé sur la figure 3).

De plus, le ou les flux d'air en sortie de la volute 17 s'écoulent suivant l'axe B.

Par ailleurs, la volute 17 peut entourer également au moins partiellement le moteur (non représenté).

La volute 17 comporte deux canaux 18, 19 s'étendant respectivement en regard des première et deuxième parties axiales 5, 6 de la turbine 2. Au vu de la disposition sur les figures 1 à 3, le canal 18 forme un canal inférieur en regard de la partie basse 5 de la turbine 2, et le canal 19 un canal supérieur en regard de la partie haute 6 de la turbine 2.

La volute 17 peut comporter en outre une paroi de séparation (non visible sur les figures), par exemple de forme annulaire, permettant de délimiter les deux canaux 18, 19. La paroi de séparation peut être agencée de manière à séparer la volute 17 en deux moitiés, avantageusement égales.

La volute 17 comprend une ouverture supérieure 22 permettant le passage d'au moins un flux d'air au sein du pulseur 1. Cette ouverture supérieure 22 est mieux visible sur la figure 3.

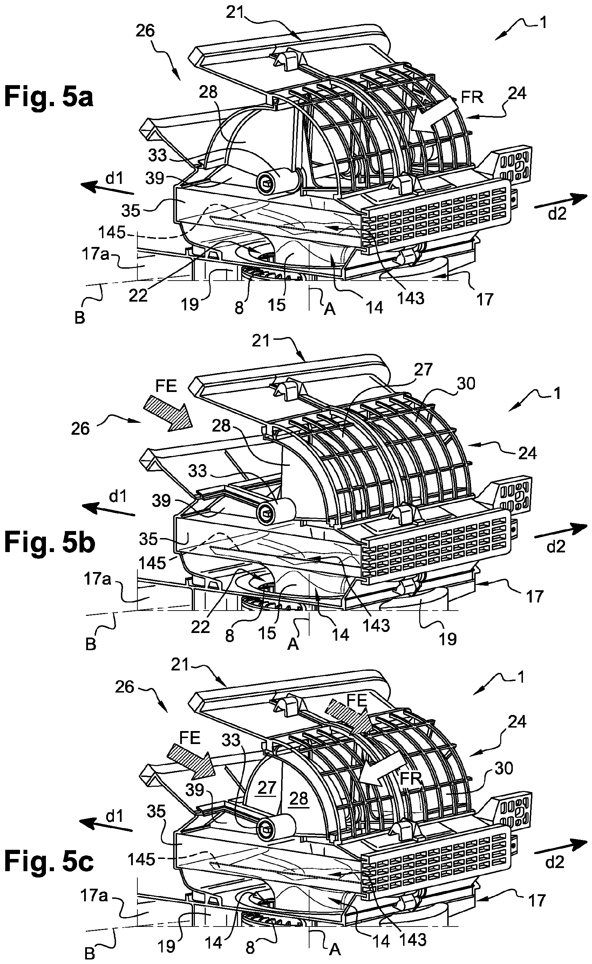

En référence aux figures 5a à 5c, le boîtier d'entrée d'air 21 est fixé au-dessus de l'ouverture supérieure 22 de la volute 17.

Le boîtier d'entrée d'air 21 comprend un espace interne. L'espace interne délimite une section de passage d'air. L'espace interne du boîtier d'entrée d'air 21 est ouvert vers le bas en référence à la disposition sur les figures 5a à 5c, c'est-à-dire ouvert du côté de la turbine 2. La section de passage d'air est délimitée par une première dimension d1 qui correspond à la profondeur, une deuxième dimension d2 qui correspond à la largeur, et la hauteur selon l'axe A. Les directions des dimensions d1 et d2 sont schématisées par des flèches sur les figures 1 à 3.

En se référant plus particulièrement à la figure 3, la deuxième dimension d2 s'étend ici parallèlement ou sensiblement parallèlement à l'axe B de la sortie de volute 17a. La première dimension d1 s'étend selon une direction perpendiculaire à l'axe B d'extension de la sortie de volute 17a.

Par ailleurs, le boîtier d'entrée d'air 21 comprend au moins deux entrées d'air 24, 26 distinctes, pour permettre l'écoulement des flux d'air différents, notamment du flux d'air de recyclage FR et du flux d'air extérieur FE, au sein du pulseur 1.

En se référant de nouveau aux figures 1 et 2, les entrées d'air 24, 26 s'étendent de façon consécutive dans le sens de la profondeur d1 du boîtier d'entrée d'air 21. Chaque entrée d'air 24, 26 s'étend sur toute la largeur d2 du boîtier d'entrée d'air 21 et sur une partie seulement dans le sens de la profondeur d1.

L'entrée d'air 24 correspond à une ouverture pour le passage du flux d'air de recyclage FR et est désignée par la suite entrée d'air de recyclage 24. L'entrée d'air 26 correspond à une ouverture pour le passage du flux d'air extérieur FE et est désignée par la suite entrée d'air extérieur 26. Bien entendu, les entrées d'air 24 et 26 peuvent être inversées.

Afin de gérer l'entrée des différents flux d'air, le boîtier d'entrée d'air 21 comprend en outre des moyens ou organes de guidage d'air 27, 28, 30 (voir figures 2 et 3). Les organes de guidage d'air 27, 28, 30 peuvent diriger des flux d'air de types différents, notamment le flux d'air de recyclage et le flux d'air extérieur, pour des modes de fonctionnement différents. En particulier, ils permettent de diriger un flux d'air dans un premier canal de circulation d'air, et plus généralement vers la première partie 5 axiale de la turbine 2, et/ou dans un deuxième canal de circulation d'air, et plus généralement vers la deuxième partie 6 axiale de la turbine 2.

Les organes de guidage d'air comportent un ou plusieurs volets 27, 28, 30 mobiles.

En particulier, il peut s'agir de volets tambour, papillon ou drapeau. Un volet papillon correspond à un volet comprenant au moins une pale ou paroi latérale et un arbre de rotation situé au centre du volet, par exemple dans le cas où il y aurait deux parois latérales, l'arbre de rotation est agencé entre les deux parois latérales. Un volet drapeau correspond à un volet comprenant au moins une pale et un arbre de rotation situé à une extrémité du volet. Un volet tambour correspond à un volet comprenant deux parois latérales inscrites dans deux plans distincts et parallèles entre eux avec une paroi incurvée servant à empêcher le passage du flux d'air reliant les deux parois latérales et un arbre de rotation servant à induire le mouvement de rotation via un actionneur relie également les deux parois latérales. Autrement dit, la paroi incurvée et l'arbre de rotation forment une continuité de matière entre les deux parois latérales.

Selon le mode de réalisation décrit, les organes de guidage d'air comprennent ici, plusieurs volets (mieux visibles sur la figure 3), par exemple trois volets, dont un volet central 27, et deux volets latéraux 28 et 30 de part et d'autre du volet central 27. Il s'agit avantageusement de volets de même nature, tels que des volets tambour.

Selon le mode de réalisation décrit, le volet central 27 et les volets latéraux 28, 30 sont agencés entre l'entrée d'air de recyclage 24 et l'entrée d'air extérieur 26 de manière à être aptes à obturer au moins partiellement ou entièrement ces deux entrées d'air 24, 26 selon le mode de fonctionnement.

Dans cet exemple, le volet central 27 et les volets latéraux 28, 30 sont agencés de manière à être entraînés en rotation autour d'un axe de pivotement. En particulier, l'axe de pivotement est un axe commun 33 pour les trois volets 27, 28, 30. Autrement dit, les trois volets 27, 28, 30 sont coaxiaux et mobiles autour d'un unique axe de pivotement 33.

Selon ce mode de réalisation, l'axe de pivotement 33 est parallèle à l'axe B, qui correspond à l'axe d'extension de la sortie de volute 17a ou autrement dit à l'axe d'écoulement d'au moins un flux d'air en sortie de la volute 17.

De plus, l'axe de pivotement 33 est perpendiculaire par rapport à l'axe A de rotation de la turbine 2.

Par ailleurs, en se référant à la vue de dessus, comme schématisé de façon symbolique sur la figure 4, l'axe de pivotement 33 est perpendiculaire à la direction générale d'entrée des flux d'air extérieur FE et de recyclage FR.

Les volets 27, 28 et 30 s'étendent chacun non pas sur la totalité de la largeur d2 de la section de passage d'air, mais chacun sur une portion, notamment un tiers, de la largeur d2 de la section de passage d'air dans le boîtier d'entrée d'air 21. Autrement dit, ces volets 27, 28, 30 sont agencés selon trois rangées entre l'arrivée d'air extérieur 26 et l'arrivée d'air de recyclage 24.

Chaque volet 27, 28, 30 a une course entre deux positions extrêmes, une première position extrême, dans laquelle le volet obture l'entrée d'air extérieur 26, et une deuxième position extrême, dans laquelle le volet obture l'entrée d'air de recyclage 24.

Dans chaque position extrême, les volets latéraux 28, 30 viennent en appui contre au moins une butée, par exemple au niveau de rebords, de parois d'appui, tels qu'une paroi incurvée, une paroi plane, ou encore une butée surmoulée sur une paroi plane, du boîtier d'entrée d'air 21.

Le pulseur 1, et notamment les organes de guidage d'air comprennent en outre des moyens de cinématique entre leur course respective de manière à synchroniser les déplacements d'au moins certains volets limitant ainsi le nombre d'actionneurs nécessaires. Les moyens de cinématique comprennent par exemple des chemins de came avec plusieurs pignons de sorties, des bielles de connexions entre les volets, etc. Un actionneur commun peut notamment piloter simultanément les différents volets.

En se référant de nouveau aux figures 1 à 3, le ou les organes de séparation des flux d'air permettent, quant à eux, de séparer un premier flux d'air destiné à traverser la première partie 5 axiale de la turbine 2 et un deuxième flux d'air destiné à traverser la deuxième partie 6 axiale de la turbine 2. Ils sont notamment configurés pour délimiter :
- le premier canal de circulation d'air permettant l'écoulement du premier flux d'air et
- le deuxième canal de circulation d'air permettant l'écoulement du deuxième flux d'air. Le ou les organes de séparation des flux d'air sont agencés fixes dans le pulseur 1.

En particulier, le ou les organes de séparation des flux d'air comportent une cloison séparatrice 14 permettant de séparer le premier flux d'air et le deuxième flux d'air, cette cloison séparatrice 14 étant mieux visible sur la figure 3.

La cloison séparatrice 14 est montée au sein du pulseur 1 et s'étend au moins en partie dans l'espace interne de la turbine 2.

La cloison séparatrice 14 s'étend par exemple depuis une zone médiane de la turbine 2 entre les deux parties axiales 5, 6 en direction du boîtier d'entrée d'air 21 (non visible sur la figure 3). Dans cet exemple, la cloison séparatrice 14 s'étend depuis la zone médiane de la turbine 2 jusqu'à un point situé au-delà de la deuxième extrémité 8.

La cloison séparatrice 14 est montée fixe par rapport à la volute 17. Il peut s'agir d'une pièce rapportée ou moulée avec la volute 17.

Par ailleurs, il s'agit d'un organe creux définissant un canal de contour fermé.

La cloison séparatrice 14 est agencée de manière à séparer les flux d'air en un flux central circulant à l'intérieur de la cloison séparatrice 14 et un flux périphérique circulant autour de la cloison séparatrice 14. Le flux central correspond au premier flux d'air. Le flux périphérique correspond au deuxième flux d'air.

Autrement dit, la cloison séparatrice 14 délimite un canal interne formant au moins une partie du premier canal de circulation d'air, le deuxième canal de circulation d'air s'étendant à l'extérieur de la cloison séparatrice 14.

La cloison séparatrice 14 présente avantageusement une forme de révolution. Cette cloison séparatrice 14 peut être coaxiale à la turbine 2. Dans ce cas, la cloison séparatrice 14 présente une forme de révolution autour de l'axe A de rotation de la turbine 2.

Le diamètre de la cloison séparatrice 14 est avantageusement choisi pour garantir la répartition des flux d'air lorsqu'ils sont différents, dans la volute 17 et par la suite dans le véhicule automobile, dans des proportions voulues, par exemple de façon non limitative de l'ordre de 60% dans le canal supérieur 19 et de l'ordre de 40% dans le canal inférieur 18.

La cloison séparatrice 14 peut présenter une forme générale au moins en partie évasée pour diriger les flux d'air vers les pales 3 de la turbine 2.

À titre d'exemple, la cloison séparatrice 14 peut comporter une partie haute ou amont 15 cylindrique ou tubulaire. La partie haute 15 cylindrique s'étend entre la deuxième extrémité 8 de la turbine 2 et une partie inférieure du boîtier d'entrée d'air 21.

La cloison séparatrice 14 peut présenter également une partie basse ou avale (non visible sur les figures) s'évasant vers le bas. Autrement dit, la partie basse, et plus généralement la cloison séparatrice 14, s'évase de l'amont vers l'aval. Les termes amont et aval sont définis en référence au sens d'écoulement de l'air à travers le pulseur 1. Une telle partie basse peut s'étendre entre la deuxième extrémité 8 de la turbine 2 et la zone axialement médiane de la turbine 2. La partie basse peut présenter une forme de révolution d'axe A. Avantageusement, la périphérie radiale de la partie basse est inférieure à la périphérie radiale des pâles 3 de la turbine 2, de manière à ne pas gêner la rotation des pales 3.

La cloison séparatrice 14 comporte une extrémité amont 141. Cette extrémité amont 141 termine notamment la partie haute 15 du côté opposé à la partie basse 16.

L'extrémité amont 141 s'étend dans le boîtier d'entrée d'air 21, notamment dans la partie inférieure du boîtier d'entrée d'air 21.

En particulier, l'extrémité amont 141 s'étend sur toute la première dimension ou profondeur d1 et sur une partie seulement de la deuxième dimension ou largeur d2. Ainsi, de l'air peut s'écouler dans les passages latéraux situés entre la surface externe de la cloison séparatrice 14 et la paroi interne du boîtier d'entrée d'air 21 ou le bord de l'ouverture supérieure 22 de la volute 17 (figure 3).

Cette extrémité amont 141 est par exemple de section sensiblement rectangulaire. L'extrémité amont 141 présente une ouverture 143, notamment centrale, dans le prolongement du canal interne de la cloison séparatrice 14 formant au moins une partie du premier canal de circulation d'air. Cette ouverture 143 est délimitée par deux plaques de maintien 145 permettant le maintien de la cloison séparatrice 14 dans le pulseur 1.

À l'état monté dans la volute 17, l'extrémité amont 141, en particulier ses plaques de maintien 145 viennent en appui contre la volute 17, plus précisément contre une paroi ou un rebord supérieur de la volute 17.

Suivant la deuxième dimension d2 du boîtier d'entrée d'air, les plaques de maintien 145 présentent une étendue similaire à l'étendue du volet central 27. En d'autres termes, la largeur des plaques de maintien 145 est égale ou sensiblement égale à la largeur du volet central 27. L'extrémité amont 141 de la cloison séparatrice 14 peut être raccordée à la partie haute cylindrique 15 par une zone de raccordement progressive.

L'ouverture supérieure 22 de la volute 17 permet le passage de la cloison séparatrice 14, en particulier de la partie haute 15. L'espace interne du boîtier d'entrée d'air 21 permet l'entrée d'air dans la cloison séparatrice 14 et/ou dans la turbine 2 via l'ouverture supérieure 22. Ainsi, les flux d'air peuvent s'écouler au sein de la cloison séparatrice 14 ainsi que dans des passages latéraux situés entre la surface externe de la cloison séparatrice 14 et le bord de l'ouverture supérieure 22 de la volute 17.

Selon le mode de réalisation décrit, le flux périphérique d'air circulant autour de la cloison séparatrice 14 alimente le canal supérieur 19 de la volute 17. Le flux central en provenance de l'intérieur de la cloison séparatrice 14 alimente le canal inférieur 18 de la volute 17.

En outre, le ou les organes de séparation des flux d'air comportent encore une cloison séparatrice 39 additionnelle, mieux visible sur la figure 3.

La cloison séparatrice 39 additionnelle est agencée dans le boîtier d'entrée d'air 21 de manière à entourer au moins partiellement une région d'extrémité du volet central 27 dans une position extrême.

Avantageusement, la cloison séparatrice 39 additionnelle présente au moins une butée contre laquelle le volet central 27 peut terminer sa course, de manière à permettre une obturation étanche de l'entrée d'air extérieur 26 ou de l'entrée d'air de recyclage 24.

Selon le mode de réalisation décrit, la cloison séparatrice 39 additionnelle présente une base, et en particulier un cadre 391 formant base. Ce cadre 391 s'étend principalement selon une direction d'extension perpendiculaire à l'axe B d'extension de la sortie de volute 17a. Ce cadre 391 s'étend principalement selon une direction d'extension perpendiculaire à l'axe B d'extension de la sortie de volute 17a, ou autrement dit perpendiculaire à l'axe d'écoulement d'au moins un flux d'air en sortie de la volute 17.

Le cadre 391 est agencé en regard de l'extrémité amont 141 de la cloison séparatrice 14. Le cadre 391 est de forme complémentaire à la forme de l'extrémité amont 141 de la cloison séparatrice. En particulier, le cadre 391 présente un contour de forme similaire à l'extrémité amont 141, dans cet exemple de forme sensiblement rectangulaire. Les dimensions du cadre 391 sont par exemple égales ou sensiblement égales aux dimensions de l'extrémité amont 141. À chaque position extrême, le volet central 27 vient terminer sa course contre les côtés latéraux, notamment les petits côtés latéraux du cadre 391.

Le cadre 391 délimite un évidement 393 intérieur. Cet évidement 393 permet le passage de l'air.

Selon le mode de réalisation décrit, la cloison séparatrice 39 additionnelle est symétrique par rapport à l'axe de pivotement 33.

La cloison séparatrice 39 additionnelle comporte encore une ceinture 395 qui s'étend à l'aplomb de l'une des faces du cadre 391, par exemple depuis une région centrale ou sensiblement centrale du cadre 391. Cette ceinture 395 délimite un évidement intérieur. La ceinture 395 est configurée de manière à entourer le volet central 27, et plus précisément une région d'extrémité du volet central 27 lorsqu'il est dans l'une ou l'autre des positions extrêmes. La forme de la ceinture 395 de la cloison séparatrice 39 additionnelle est complémentaire de la forme du volet central 27, en particulier de la section transversale du volet central 27.

La cloison séparatrice 39 additionnelle, et en particulier la ceinture 395 assure une séparation d'avec les volets latéraux 28, 30.

Afin d'améliorer la qualité de l'air, le boîtier d'entrée d'air 21 peut comprendre en outre au moins un filtre 35 (voir figures 5a à 5c). Ce filtre 35 est destiné à être traversé par le premier et le deuxième flux d'air. Le filtre 35 est donc agencé en aval des entrées d'air 24, 26 selon la direction d'écoulement de l'air dans le boîtier d'entrée d'air 21.

Il peut s'agir notamment d'un média plissé.

Le filtre 35 est monté dans le boîtier d'entrée d'air 21, notamment dans la partie inférieure du boîtier d'entrée d'air 21, en occupant toute ou quasiment toute la largeur d2 et la profondeur d1 de la section de passage d'air dans l'espace interne du boîtier d'entrée d'air 21. De façon générale, le filtre 35 est agencé axialement entre la cloison séparatrice 14 et les entrées d'air 24, 26. Selon la variante de réalisation illustrée sur les figures 5a à 5c, le filtre 35 est monté axialement entre d'une part la cloison séparatrice 14 et d'autre part la cloison séparatrice 39 additionnelle, et notamment également les volets coaxiaux 27, 28, 30.

Un tel filtre 35 peut être démonté facilement, en ouvrant ou en retirant le boîtier d'entrée d'air 21 accessible par exemple depuis la boîte à gants du véhicule.

Sur les figures, le filtre 35 est représenté par un filtre de forme générale rectangulaire. Bien entendu, cette forme n'est pas limitative. Le filtre 35 peut être un filtre plan ou arrondi.

Dans le cas d'un filtre 35 rectangulaire, il s'étend dans le sens de la longueur suivant la deuxième dimension d2 et dans le sens de la largeur suivant la première dimension d1. L'extrémité amont 141 de la cloison séparatrice 14 s'étend alors suivant toute la largeur du filtre 35 et sur une partie seulement de la longueur du filtre 35.

En variante, le filtre 35 peut ne pas être agencé dans le boîtier d'entrée d'air 21 mais être agencé ailleurs dans le dispositif de chauffage et/ou ventilation et/ou climatisation. À titre d'exemple non limitatif, dans ce cas, le filtre 35 peut être placé en amont d'un échangeur thermique du dispositif de chauffage et/ou ventilation et/ou climatisation tel qu'un évaporateur.

Avantageusement, le filtre 35 comporte des guides d'air (non représentés sur les figures), comprenant par exemple une ou plusieurs cloisons ou bandes de séparation, permettant de limiter voire d'empêcher le mélange entre les flux d'air, notamment dans un fonctionnement du pulseur 1 dans lequel des flux d'air distincts sont aspirés. Les guides d'air peuvent être des pièces rapportées sur le filtre 35. Ces guides d'air sont positionnés dans la continuité des grands côtés de la cloison séparatrice 39 additionnelle, de façon à partitionner les flux d'air en provenance des entrées d'air distinctes 24 et 26 du boîtier d'entrée d'air 11. En variante, on peut agencer plusieurs filtres distincts, par exemple trois filtres.

Dans le cas où le filtre 35 ne serait pas agencé dans le boîtier d'entrée d'air 21, on peut envisager, que la cloison séparatrice 39 additionnelle et la cloison séparatrice 14 soient réalisées d'une seule pièce.

### Fonctionnement du pulseur

Le pulseur 1 peut fonctionner selon plusieurs modes de fonctionnement, dont notamment :
- un premier mode appelé 100% recyclage (figure 5a), selon lequel seul l'air de recyclage FR est aspiré au sein du pulseur 1,
- un deuxième mode appelé 100% frais (figure 5b), selon lequel seul l'air extérieur FE est aspiré au sein du pulseur 1, ou encore
- un troisième mode 50/50 (figure 5c), selon lequel de l'air extérieur FE et de l'air de recyclage FR sont aspirés au sein du pulseur 1.

### Mode 100% recyclage : 1^{er} mode

La figure 5a illustre le premier mode de fonctionnement, 100% recyclage, dans lequel seul l'air de recyclage FR est aspiré au sein du pulseur 1, de manière à alimenter le dispositif de chauffage, ventilation et/ou de climatisation en air de recyclage FR. Un tel mode de fonctionnement peut par exemple être utilisé en cas de climatisation de l'air (par exemple en été). En effet, dans un tel cas, l'humidité présente dans l'air de l'habitacle a tendance à se condenser lors de son passage dans l'évaporateur permettant le refroidissement de l'air. Cet air de recyclage n'est donc pas ou peu chargé en humidité et peut être envoyé dans l'habitacle, notamment à proximité du pare-brise.

Dans ce mode de fonctionnement, les volets coaxiaux 27, 28, 30 sont dans la première position extrême d'obturation de l'entrée d'air extérieur 26, et laissent libre l'entrée d'air de recyclage 24.

De la sorte, le flux d'air extérieur FE ne peut pas s'écouler au sein du pulseur 1, tandis que le flux d'air de recyclage FR peut s'écouler au sein du pulseur 1 à travers l'entrée d'air de recyclage 24.

Ainsi, en se référant également aux figures 1 à 3, au moins une partie du flux d'air de recyclage FR, correspondant à l'air prélevé dans l'habitacle, pénètre donc par l'entrée d'air de recyclage 24, traverse la cloison séparatrice 39 additionnelle, le filtre 35, la cloison séparatrice 14, la partie basse 5 de la turbine 2, et pénètre dans le canal 18, ce dernier débouchant par exemple dans l'habitacle du véhicule à distance du pare-brise. Parallèlement, une autre partie du flux d'air de recyclage FR en provenance de l'entrée d'air de recyclage 24, traverse le filtre 35 et les passages latéraux situés entre la surface externe de la cloison séparatrice 14 et le bord de l'ouverture supérieure 22 de la volute 17, la partie haute 6 de la turbine 2 et pénètre dans le canal 19, ce dernier débouchant par exemple dans l'habitacle du véhicule à proximité ou directement en regard du pare-brise.

En clair, le flux d'air de recyclage FR s'écoule à la fois à travers le premier canal de circulation et le deuxième canal de circulation avant de déboucher dans l'habitacle.

### Mode 100% frais : 2^{eme} mode

La figure 5b illustre le deuxième mode de fonctionnement, 100% frais, dans lequel seul l'air extérieur FE est aspiré au sein du pulseur 1, de manière à alimenter le dispositif de chauffage, ventilation et/ou de climatisation en air extérieur. Un tel mode de fonctionnement peut par exemple être utilisé en cas de chauffage de l'air extérieur (par exemple en hiver ou à la mi-saison) tout en évitant que trop de buée ne se forme sur le pare-brise.

Dans ce mode de fonctionnement, les volets coaxiaux 27, 28, 30 sont dans la deuxième position extrême d'obturation de l'entrée d'air de recyclage 24, et laissent libre l'entrée d'air extérieur 26.

De la sorte, le flux d'air extérieur FE peut s'écouler au sein du pulseur 1 tandis que le flux d'air de recyclage FR ne peut pas s'écouler au sein du pulseur 1.

Dans ce cas, en se référant également aux figures 1 à 3, le flux d'air extérieur FE entrant depuis l'entrée d'air extérieur 26, traverse la cloison séparatrice 39 additionnelle, le filtre 35, la cloison séparatrice 14, la partie basse 5 de la turbine 2, et pénètre dans le canal 18, ce dernier débouchant dans l'habitacle du véhicule, par exemple à distance du pare-brise. Parallèlement, le flux d'air extérieur FE s'écoule également, via l'extérieur de la cloison séparatrice 14, dans la partie haute 6 de la turbine 2 et pénètre dans le canal 19 ce dernier débouchant dans l'habitacle du véhicule, par exemple à proximité ou directement en regard du pare-brise.

En clair, le flux d'air extérieur FE s'écoule à la fois à travers le premier canal de circulation et le deuxième canal de circulation avant de déboucher dans l'habitacle.

### Mode 50/50 : 3^{er} mode

La figure 5c illustre le troisième mode de fonctionnement, 50/50, dans lequel de l'air extérieur FE et de l'air de recyclage FR sont aspirés au sein du pulseur 1, de manière à alimenter le dispositif de chauffage, ventilation et/ou de climatisation en air extérieur et de recyclage, le pulseur 1 permettant de générer deux flux d'air distincts. Un tel mode de fonctionnement peut par exemple être utilisé en cas de chauffage de l'air (par exemple en hiver ou à la mi- saison) et permet de réduire le temps nécessaire pour atteindre une température de consigne, la température de l'air prélevé dans l'habitacle étant supérieure à la température de l'air externe, sans que trop de buée ne se forme sur le pare-brise.

Pour ce mode de fonctionnement, les organes de guidage d'air permettent de diriger le premier flux d'air, ici le flux d'air de recyclage FR, dans le premier canal de circulation d'air et le deuxième flux d'air, ici le flux d'air extérieur FE, dans le deuxième canal de circulation d'air.

Dans ce mode de fonctionnement, le volet central 27 est dans la première position extrême d'obturation de l'entrée d'air extérieur 26. Les volets latéraux 28, 30 sont dans la deuxième position extrême d'obturation de l'entrée d'air de recyclage 24.

De la sorte, le flux d'air extérieur FE peut s'écouler au sein du pulseur 1 à travers l'entrée d'air extérieur 26 pour être guidé vers l'extérieur de la cloison séparatrice 14, et le flux d'air de recyclage FR peut également s'écouler dans le pulseur 1 à travers le volet central 27 qui guide le flux d'air de recyclage FR en direction de l'intérieur de la cloison séparatrice 39 additionnelle puis de la cloison séparatrice 14.

Dans ce mode de fonctionnement, les flux d'air sont séparés en un flux central qui est le flux d'air de recyclage FR et un flux périphérique qui est le flux d'air extérieur FE.

Ainsi, en se référant également aux figures 1 à 3, le flux d'air de recyclage FR traverse la cloison séparatrice 39 additionnelle, le filtre 35 et la cloison séparatrice 14, la partie basse 5 de la turbine 2, et pénètre dans le canal 18, ce dernier débouchant par exemple dans l'habitacle du véhicule à distance du pare-brise. Parallèlement, le flux d'air extérieur FE s'écoule, via l'extérieur de la cloison séparatrice 14, dans la partie haute 6 de la turbine 2 et pénètre dans le canal 19, ce dernier débouchant par exemple dans l'habitacle du véhicule à proximité ou directement en regard du pare-brise.

Avec cet agencement, les trois volets coaxiaux 27, 28, 30, notamment en complément de la cloison séparatrice 14, assurent le partitionnement du boîtier d'entrée d'air en trois parties distinctes, séparées par les volets et coaxiaux 27, 28, 30 et la cloison séparatrice 39 additionnelle. Les volets coaxiaux 27, 28, 30 permettent de limiter le nombre de cloisons pour séparer les flux d'air.

En outre, l'extrémité amont 141 de la cloison séparatrice 14 est tournée d'environ 90° par rapport aux solutions de l'art antérieur, de façon à optimiser ce partitionnement. L'extrémité amont 141 s'étend donc dans le sens de la profondeur du boîtier d'entrée d'air 21 qui correspond également au sens de la largeur du filtre 35 lorsqu'il est prévu, et non plus dans le sens de la longueur du filtre 35 comme dans les solutions de l'art antérieur.

Enfin, le partitionnement obtenu avec les cloisons séparatrices 14, 39 selon cette solution permet de limiter le mélange entre les flux d'air lorsqu'ils sont différents et réduire ainsi les risques d'embuage en mode de fonctionnement 50/50.

### Mode 50/50 : 4^{eme} mode

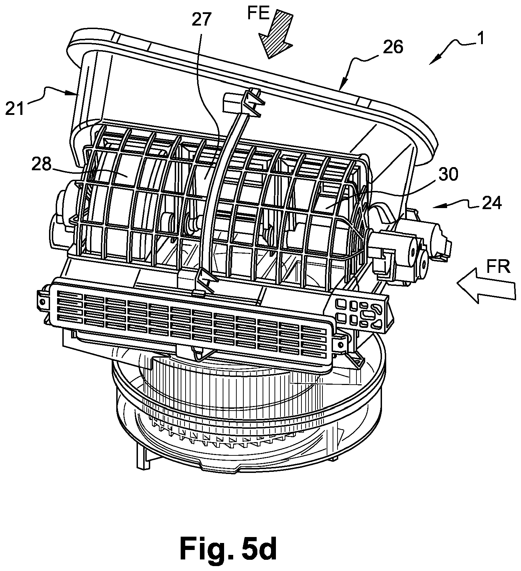

La figure 5d illustre un quatrième mode de fonctionnement, 50/50, dans lequel de l'air extérieur FE et de l'air de recyclage FR sont aspirés au sein du pulseur 1, de manière à alimenter le dispositif de chauffage, ventilation et/ou de climatisation en air extérieur et de recyclage, le pulseur 1 permettant de générer deux flux d'air distincts. Un tel mode de fonctionnement peut par exemple être utilisé en cas de chauffage de l'air (par exemple en hiver ou à la mi- saison) et permet de réduire encore plus le temps nécessaire pour atteindre une température de consigne, la température de l'air prélevé dans l'habitacle étant supérieure à la température de l'air externe, toutefois une quantité de buée plus importante que le troisième mode se formera sur le pare-brise.

Pour ce mode de fonctionnement, les organes de guidage d'air permettent de diriger le premier flux d'air, ici le flux d'air de recyclage FR, dans le premier canal et le deuxième canal de circulation d'air et le deuxième flux d'air, ici le flux d'air extérieur FE, dans le deuxième canal de circulation d'air.

Dans ce mode de fonctionnement, le volet central 27 et un des volets latéraux 30 comme illustré sur la figure 5d sont dans la première position extrême d'obturation de l'entrée d'air extérieur 26. L'autre volet latéral 28 comme illustré sur la figure 5d est dans la deuxième position extrême d'obturation de l'entrée d'air de recyclage 24.

De la sorte, le flux d'air extérieur FE peut s'écouler au sein du pulseur 1 à travers l'entrée d'air extérieur 26 et un des volets latéraux 28 pour être guidé vers l'extérieur de la cloison séparatrice 14. Le flux d'air de recyclage FR peut s'écouler au sein du pulseur 1 à travers l'entrée d'air de recyclage 24 et l'autre volet latéral 30 pour être guidé vers l'extérieur de la cloison séparatrice 14. Le flux d'air de recyclage FR peut également s'écouler dans le pulseur 1 à travers le volet central 27 qui guide le flux d'air de recyclage FR en direction de l'intérieur de la cloison séparatrice 39 additionnelle puis de la cloison séparatrice 14.

Ceci est possible puisque le boitier d'entrée d'air comprend un mécanisme d'actionnement (non illustré) permettant de déplacer les deux volets latéraux 28,30 indépendamment l'un de l'autre. Le mécanisme d'actionnement peut correspondre à une cinématique avec un chemin de came dans lequel coulissent des pions reliés à chaque volet latéral 28,30 par l'intermédiaire de bras ou leviers, la came étant configurée pour permettre le déplacement de chaque volet latéral 28,30 de manière indépendante l'un de l'autre. Le mécanisme d'actionnement peut également correspondre à deux actionneurs indépendants et spécifiques à chaque volet latéral 28,30.

Dans ce mode de fonctionnement, les flux d'air sont séparés en un flux central qui est le flux d'air de recyclage FR et un flux périphérique qui est constitué d'un mélange d'un flux d'air extérieur FE et de recyclage FR. Il est donc possible d'avoir un recyclage partiel sur le flux d'air supérieur en direction du pare-brise.

Ainsi, il est possible de réduire le temps de chauffage du flux d'air en direction du pare-brise puisque le flux d'air de recyclage est de température plus élevé que le flux d'air extérieur.

Ainsi, en se référant également aux figures 1 à 3, le flux d'air de recyclage FR traverse la cloison séparatrice 39 additionnelle, le filtre 35 et la cloison séparatrice 14, la partie basse 5 de la turbine 2, et pénètre dans le canal 18, ce dernier débouchant par exemple dans l'habitacle du véhicule à distance du pare-brise. Parallèlement, un mélange d'un flux d'air extérieur FE et d'un flux d'air de recyclage FR s'écoule, via l'extérieur de la cloison séparatrice 14, dans la partie haute 6 de la turbine 2 et pénètre dans le canal 19, ce dernier débouchant par exemple dans l'habitacle du véhicule à proximité ou directement en regard du pare-brise.

Ce mode de réalisation présente toutefois un risque d'apparition de buée sur le pare-brise plus important que le troisième mode de réalisation. Selon l'invention, il est possible d'implémenter un capteur d'humidité, ou de désembuage, à proximité du pare-brise. Ce capteur est apte à mesurer le niveau d'humidité, ou de désembuage, du pare-brise et d'envoyer un signal, ou une commande, à l'unité de commande électronique (communément appelé ECU) du véhicule qui, à travers le mécanisme d'actionnement, déplacera le volet latéral, ici 30, dans la position extrême d'obturation de l'entrée d'air de recyclage 24 afin d'obtenir la même configuration que dans le 3^{eme} mode de fonctionnement 50/50 tel que décrit précédemment.

Avec cet agencement, les trois volets coaxiaux 27, 28, 30, notamment en complément de la cloison séparatrice 14, assurent le partitionnement du boîtier d'entrée d'air en trois parties distinctes, séparées par les volets et coaxiaux 27, 28, 30 et la cloison séparatrice 39 additionnelle. Les volets coaxiaux 27, 28, 30 permettent de limiter le nombre de cloisons pour séparer les flux d'air.

De plus, le boitier d'entrée d'air selon l'invention permet d'avoir plusieurs modes de fonctionnement sans contournement du pulseur, les volets latéraux 28,30 fonctionnant en mode tout ou rien. En effet, les deux volets latéraux 28,30 sont mobiles entre deux positions uniquement à savoir une première position où un ou lesdits volets latéraux 28,30 obturent l'entrée d'air extérieur 26 et une seconde position extrême dans laquelle un ou lesdits volets latéraux 28,30 obturent l'entrée d'air de recyclage 24.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

## Revendications

1. Boîtier d'entrée d'air (21), notamment pour un dispositif de chauffage, ventilation et/ou climatisation, comportant :
- au moins deux entrées d'air (24, 26) distinctes, et
- des organes de guidage d'air (27, 28, 30) configurés pour diriger au moins un flux d'air destiné à être admis dans le boîtier d'entrée d'air (21), **caractérisé en ce que** les organes de guidage d'air comportent au moins trois volets (27, 28, 30) coaxiaux, dont un volet central (27) et deux volets latéraux (28, 30) agencés de part et d'autre du volet central (27), lesdits volets coaxiaux (27, 28, 30) étant agencés entre lesdites deux entrées d'air (24, 26) distinctes du boîtier d'entrée d'air (21), de façon mobile autour d'un unique axe de pivotement (33), et **en ce que** le boitier d'entrée d'air (21) comprend un mécanisme d'actionnement permettant de déplacer les deux volets latéraux (28,30) indépendamment l'un de l'autre.

2. Boîtier d'entrée d'air (21) selon la revendication précédente, dans lequel le mécanisme d'actionnement permet de déplacer les deux volets latéraux soit dans une première position où lesdits volets latéraux obturent une première entrée d'air (26), soit dans une seconde position extrême, dans laquelle lesdits volets latéraux (28, 30) obturent une seconde entrée d'air (24).

3. Boîtier d'entrée d'air (21) selon l'une des revendications précédentes, dans lequel lesdits volets coaxiaux (27, 28, 30) sont de type tambour.

4. Pulseur (1) d'aspiration, notamment pour un dispositif de chauffage, ventilation et/ou climatisation d'un véhicule automobile, le pulseur (1) comprenant :
- une turbine (2) configurée pour être entrainée en rotation autour d'un axe (A) et présentant au moins une première partie (5) dite « partie haute » et une deuxième partie (6) dite « partie basse »,
- une volute (17) entourant la turbine (2) et présentant une sortie de volute (17a) s'étendant selon un axe (B), et
- un boîtier d'entrée d'air (21) selon l'une des revendications 1 à 3, l'axe de pivotement (33) des volets coaxiaux (27, 28, 30) étant parallèle à l'axe (B) d'extension de la sortie de volute (17a).

5. Pulseur (1) d'aspiration selon la revendication précédente, comprenant en outre une cloison séparatrice (14) s'étendant au moins en partie dans la turbine (2), de façon à séparer un premier flux d'air destiné à traverser la première partie axiale (5) de la turbine (2) et un deuxième flux d'air destiné à traverser la deuxième partie axiale (6) de la turbine (2).

6. Pulseur (1) d'aspiration selon la revendication précédente, dans lequel la cloison séparatrice (14) présente une extrémité amont (141) s'étendant dans le boîtier d'entrée d'air (21) selon une direction d'extension principale perpendiculaire à l'axe (B) d'extension de la sortie de volute (17a) et à l'axe de rotation (A) de la turbine (2).

7. Pulseur (1) d'aspiration selon la revendication précédente, dans lequel :
- le boîtier d'entrée d'air (21) comprend un espace interne délimitant une section de passage d'air ayant une première dimension (d1) selon une direction perpendiculaire à l'axe (B) d'extension de la sortie de volute (17a) et une deuxième dimension (d2) parallèle à l'axe (B) d'extension de la sortie de volute (17a), et dans lequel
- l'extrémité amont (141) de la cloison séparatrice (14) s'étend sur toute la première dimension (d1) et sur une partie de la deuxième dimension (d2).

8. Pulseur (1) d'aspiration selon l'une quelconque des revendications 4 à 7, comportant en outre une cloison séparatrice (39) additionnelle agencée dans le boîtier d'entrée d'air (21) de manière à entourer au moins partiellement une région d'extrémité du volet central (27) dans une position extrême.

9. Pulseur (1) d'aspiration selon la revendication précédente, dans lequel la cloison séparatrice (39) additionnelle présente un cadre (391) s'étendant principalement selon une direction d'extension perpendiculaire à l'axe (B) d'extension de la sortie de volute (17a), et à l'aplomb duquel s'étend une ceinture (395) de manière à entourer au moins partiellement une région d'extrémité du volet central (27) dans une position extrême.

10. Pulseur (1) d'aspiration selon la revendication précédente, dans lequel le cadre (391) de la cloison séparatrice (39) additionnelle présente au moins une butée contre laquelle le volet central (27) est configuré pour venir en butée dans une position extrême.

## Patentansprüche

1. Lufteintrittsgehäuse (21), insbesondere für eine Heizungs-, Belüftungs- und/oder Klimatisierungsvorrichtung, das aufweist:
- mindestens zwei unterschiedliche Lufteintritte (24, 26), und
- Luftführungselemente (27, 28, 30), die konfiguriert sind, mindestens einen Luftstrom zu leiten, der dazu bestimmt ist, in das Lufteintrittsgehäuse (21) eingelassen zu werden,
**dadurch gekennzeichnet, dass**
die Luftführungselemente mindestens drei koaxiale Klappen (27, 28, 30) aufweisen, darunter eine zentrale Klappe (27) und zwei seitliche Klappen (28, 30), die zu beiden Seiten der zentralen Klappe (27) angeordnet sind, wobei die koaxialen Klappen (27, 28, 30) zwischen den zwei unterschiedlichen Lufteintritten (24, 26) des Lufteintrittsgehäuses (21) um eine einzige Schwenkachse (33) herum beweglich angeordnet sind,
und dass das Lufteintrittsgehäuse (21) einen Betätigungsmechanismus enthält, der es ermöglicht, die zwei seitlichen Klappen (28, 30) unabhängig voneinander zu verschieben.

2. Lufteintrittsgehäuse (21) nach dem vorhergehenden Anspruch, wobei der Betätigungsmechanismus es ermöglicht, die zwei seitlichen Klappen entweder in eine erste Stellung, in der die seitlichen Klappen einen ersten Lufteintritt (26) verschließen, oder in eine zweite Endstellung zu verschieben, in der die seitlichen Klappen (28, 30) einen zweiten Lufteintritt (24) verschließen.

3. Lufteintrittsgehäuse (21) nach einem der vorhergehenden Ansprüche, wobei die koaxialen Klappen (27, 28, 30) von der Art Trommel sind.

4. Ansauggebläse (1), insbesondere für eine Heizungs-, Belüftungs- und/oder Klimatisierungsvorrichtung eines Kraftfahrzeugs, wobei das Gebläse (1) enthält:
- eine Turbine (2), die konfiguriert ist, um eine Achse (A) in Drehung versetzt zu werden, und mindestens einen "oberer Teil" genannten ersten Teil (5) und einen "unterer Teil" genannten zweiten Teil (6) aufweist,
- ein Turbinengehäuse (17), das die Turbine (2) umgibt und einen Turbinengehäuseausgang (17a) aufweist, der sich gemäß einer Achse (B) erstreckt, und
- ein Lufteintrittsgehäuse (21) nach einem der Ansprüche 1 bis 3, wobei die Schwenkachse (33) der koaxialen Klappen (27, 28, 30) parallel zur Ausdehnungsachse (B) des Turbinengehäuseausgangs (17a) ist.

5. Ansauggebläse (1) nach dem vorhergehenden Anspruch, das außerdem eine Trennwand (14) enthält, die sich zumindest zum Teil in der Turbine (2) erstreckt, um einen ersten Luftstrom, der dazu bestimmt ist, den ersten axialen Teil (5) der Turbine (2) zu durchqueren, und einen zweiten Luftstrom zu trennen, der dazu bestimmt ist, den zweiten axialen Teil (6) der Turbine (2) zu durchqueren.

6. Ansauggebläse (1) nach dem vorhergehenden Anspruch, wobei die Trennwand (14) ein stromaufwärts liegendes Ende (141) aufweist, das sich im Lufteintrittsgehäuse (21) gemäß einer Hauptausdehnungsrichtung lotrecht zur Ausdehnungsachse (B) des Turbinengehäuseausgangs (17a) und zur Drehachse (A) der Turbine (2) erstreckt.

7. Ansauggebläse (1) nach dem vorhergehenden Anspruch, wobei:
- das Lufteintrittsgehäuse (21) einen einen Luftdurchgangsquerschnitt begrenzenden Innenraum enthält, der eine erste Abmessung (d1) gemäß einer Richtung lotrecht zur Ausdehnungsachse (B) des Turbinengehäuseausgangs (17a) und eine zweite Abmessung (d2) parallel zur Ausdehnungsachse (B) des Turbinengehäuseausgangs (17a) hat, und wobei
- das stromaufwärts liegende Ende (141) der Trennwand (14) sich über die ganze erste Abmessung (d1) und über einen Teil der zweiten Abmessung (d2) erstreckt.

8. Ansauggebläse (1) nach einem der Ansprüche 4 bis 7, das außerdem eine zusätzliche Trennwand (39) aufweist, die so im Lufteintrittsgehäuse (21) angeordnet ist, dass sie zumindest teilweise einen Endbereich der zentralen Klappe (27) in einer Endstellung umgibt.

9. Ansauggebläse (1) nach dem vorhergehenden Anspruch, wobei die zusätzliche Trennwand (39) einen Rahmen (391) aufweist, der sich hauptsächlich gemäß einer Ausdehnungsrichtung lotrecht zur Ausdehnungsachse (B) des Turbinengehäuseausgangs (17a) erstreckt, und senkrecht zu dem sich eine Umfassung (395) so erstreckt, dass sie einen Endbereich der zentralen Klappe (27) in einer Endstellung zumindest teilweise umgibt.

10. Ansauggebläse (1) nach dem vorhergehenden Anspruch, wobei der Rahmen (391) der zusätzlichen Trennwand (39) mindestens einen Anschlag aufweist, gegen den die zentrale Klappe (27) konfiguriert ist, in einer Endstellung in Anschlag zu kommen.

## Claims

1. Air intake housing (21), notably for a heating, ventilation and/or air conditioning device, comprising:
- at least two distinct air inlets (24, 26), and
- air guiding members (27, 28, 30) configured to direct at least one airflow intended to be admitted into the air intake housing (21),
**characterized in that** the air guiding members comprise at least three coaxial flaps (27, 28, 30), these being a central flap (27) and two lateral flaps (28, 30) arranged on either side of the central flap (27), said coaxial flaps (27, 28, 30) being arranged between said two distinct air inlets (24, 26) of the air intake housing (21), such as to be able to move about a single pivot axle (33),
and **in that** the air intake housing (21) comprises an actuation mechanism making it possible to move the two lateral flaps (28, 30) independently of one another.

2. Air intake housing (21) according to the preceding claim, wherein the actuation mechanism makes it possible to move the two lateral flaps either into a first position, in which said lateral flaps close off a first air intake (26), or into a second extreme position, in which said lateral flaps (28, 30) close off a second air intake (24).

3. Air intake housing (21) according to either of the preceding claims, wherein said coaxial flaps (27, 28, 30) are of the drum type.

4. Intake blower (1), notably for a motor vehicle heating, ventilation and/or air conditioning device, the blower (1) comprising:
- a turbine (2) configured to be driven in rotation about an axis (A) and having at least a first part (5) termed "upper part" and a second part (6) termed "lower part",
- a blower housing (17) surrounding the turbine (2) and having a blower housing outlet (17a) extending along an axis (B), and
- an air intake housing (21) according to one of Claims 1 to 3, the pivot axle (33) of the coaxial flaps (27, 28, 30) being parallel to the axis (B) of extension of the blower housing outlet (17a).

5. Intake blower (1) according to the preceding claim, further comprising a dividing partition (14) extending at least in part into the turbine (2), so as to separate a first airflow intended to pass through the first axial part (5) of the turbine (2) and a second airflow intended to pass through the second axial part (6) of the turbine (2).

6. Intake blower (1) according to the preceding claim, wherein the dividing partition (14) has an upstream end (141) extending into the air intake housing (21) in a main direction of extension perpendicular to the axis (B) of extension of the blower housing outlet (17a) and to the axis (A) of rotation of the turbine (2).

7. Intake blower (1) according to the preceding claim, wherein:
- the air intake housing (21) comprises an internal space delimiting an air passage section having a first dimension (d1) in a direction perpendicular to the axis (B) of extension of the blower housing outlet (17a) and a second dimension (d2) parallel to the axis (B) of extension of the blower housing outlet (17a) and wherein;
- the upstream end (141) of the dividing partition (14) extends over the entirety of the first dimension (d1) and over part of the second dimension (d2).

8. Intake blower (1) according to any one of Claims 4 to 7, further comprising an additional dividing partition (39) arranged in the air intake housing (21) in such a way as to at least partially surround an end region of the central flap (27) in one extreme position.

9. Intake blower (1) according to the preceding claim, wherein the additional dividing partition (39) has a frame (391) extending mainly in a direction of extension perpendicular to the axis (B) of extension of the blower housing outlet (17a), and plumb with which there extends a belt (395) so as to at least partially surround an end region of the central flap (27) in one extreme position.

10. Intake blower (1) according to the preceding claim, wherein the frame (391) of the additional dividing partition (39) has at least one end stop against which the central flap (27) is configured to come to bear in one extreme position.
